# EUROPÄISCHE PATENTANMELDUNG

(11) **EP 3 572 693 A1**
(43) Veröffentlichungstag der Anmeldung: **27.11.2019**
(21) Anmeldenummer: 18174293.3
(22) Anmeldetag: 25.05.2018
(51) Int. Cl.: F16J 15/06, F01D 11/00, F16J 15/08

(54) **DICHTUNGSANORDNUNG FÜR EINE STRÖMUNGSMASCHINE**

(71) Anmelder: Siemens Aktiengesellschaft, 80333 München (DE)
(72) Erfinder: Karpat, Kürsad, 47445 Moers (DE); Romanowski, Holger, 47055 Duisburg (DE); Zander, Uwe, 45475 Mülheim an der Ruhr (DE)

(57) **Zusammenfassung**

Die Erfindung betrifft eine Dichtungsanordnung, die als L-Ring ausgebildet ist, wobei ein Dichtungskomponente (12) einen ersten Schenkel (19) und einen zweiten Schenkel (16) aufweist, die jeweils in eine Nut (17, 19) eingreifen, die mit jeweils einer Beschichtung (26, 28) ausgebildet ist, wobei die Dichtungskomponente aus dem Werkstoff X13CrMoCoVBNb9-2-1 oder Nimonic80A ausgebildet ist.

## Beschreibung

Die Erfindung betrifft eine Dichtungsanordnung umfassend ein erstes Bauteil und ein zweites Bauteil, wobei zwischen dem ersten Bauteil und dem zweiten Bauteil eine Dichtungskomponente angeordnet ist, wobei die Dichtungskomponente in eine erste Nut im ersten Bauteil und in eine zweite Nut im zweiten Bauteil angeordnet ist.

In Strömungsmaschinen wie beispielsweise Dampfturbinen sind die Materialien und die Geometrien der einzelnen Bauteile derart ausgebildet, dass die hohen Temperaturen und die hohen Drücke des Dampfes möglichtst zu keinen Schädigungen führt. Der Einströmbereich einer Dampfturbine wird besonders thermisch belastet. In der Regel strömt über ein Ventil ein Dampf in den Einströmbereich. An der Schnittstelle zwischen dem Ventil und der Dampfturbine müssen besondere Vorkehrungen getroffen werden, damit der Dampf störungsfrei in den Strömungskanal der Dampfturbine strömen kann. Dabei ist zu beachten, dass die thermische Belastung der Bauteile in einem Temperaturbereich erfolgt, der vergleichsweise groß ist. Dadurch kann es geschehen, dass die thermischen Ausdehnungen von einzelnen Bauteilen im Einströmbereich zu berücksichtigen sind. Daher wird in der Regel ein Ventil mit Dichtungen, die beweglich ausgeführt sind, an die Dampfturbine angeordnet.

Es existieren Dichtelemente, mit denen Dampf vom Ventil in das Innengehäuse dampfdicht geführt werden kann. Je nach Fixpunktlage Ventil-Außengehäuse-Innengehäuse stehen verschiedene Dichtelementtypen zur Verfügung, wie beispielsweise L-Ringe, I-Ringe, U-Ringe, Kolbenringe usw. Die vorgenannten verschiedenen Dichtelementtypen sind ausgebildet, um die Relativverformungen der Bauteile zueinander an der Dampfübergabestelle im transienten wie auch im stationären Betrieb zu kompensieren.

Allerdings geht der Trend zu immer höheren Dampfparametern. Dies führt dazu, dass die Dampftemperaturen derart sein können, dass die bisherigen eingesetzten Werkstoffe für die L-Ringe nicht mehr geeignet sind. Abhilfe könnte hier geschaffen werden, indem die Profile der L-Ringe aufgedickt werden. Allerdings würde dies zu noch größeren mechanischen Kräften führen, was zu unerlaubt hohen mechanischen Beanspruchungen führt. Mit den etablierten Werkstoffen kann einerseits nicht mehr ökonomisch und andererseits auch technisch nicht mehr sinnvoll das Problem gelöst werden, da die für sie aus der Kriechverformung begründeten Aufdickungen des Profils andere Probleme generieren. Problematisch wäre es beispielsweise, wenn ein undichtes Dichtelement bei großen Druckdifferenzen zu einer nennenswerten Leckage führen würde. Eine Leckage hat einen wesentlichen Einfluss auf den Wirkungsgrad und sollte daher vermieden werden.

Es ist daher Aufgabe der Erfindung, eine geeignete Dichtungsanordnung anzugeben, die für vergleichsweise hohe Temperaturen geeignet ist.

Gelöst wird dies durch eine Dichtungsanordnung, umfassend ein erstes Bauteil und ein zweites Bauteil, wobei zwischen dem ersten Bauteil und dem zweiten Bauteil eine Dichtungskomponente angeordnet ist, wobei die Dichtungskomponente in eine erste Nut im ersten Bauteil und in eine zweite Nut im zweiten Bauteil angeordnet ist, wobei die Dichtungskomponente aus einem hinreichend kriechfesten hochlegierten Stahl, z. B. X13CrMoCoVBNb9-2-1 oder einer Nickelbasislegierung, z. B. Nimonic80A ausgebildet ist.

Vorteilhafte Weiterbildungen sind in den Unteransprüchen angegeben.

Mit der Erfindung wird vorgeschlagen, die Dichtungsanordnung unter Verwendung von kriechfesteren Materialien zu verbessern. Durch diese Auswahl ist die Realisierung von höheren Dampfparametern und/oder längeren Standzeiten (Serviceintervallverlängerungen) möglich. Dies ist sowohl bei Volllastbedingungen als auch bei Teillastbedingungen möglich.

In einer ersten vorteilhaften Weiterbildung weist die erste Nut eine erste Berührungsfläche auf, wobei die Dichtungskomponente an der ersten Berührungsfläche anliegt und auf der ersten Berührungsfläche eine erste Beschichtung angeordnet ist. Durch diese Maßnahme lässt sich die Dampftemperatur erhöhen.

In einer zweiten vorteilhaften Weiterbildung weist die zweite Nut eine zweite Berührungsfläche auf, wobei die Dichtungskomponente an der zweiten Berührungsfläche anliegt und auf der zweiten Berührungsfläche eine zweite Beschichtung angeordnet ist.

In vorteilhafter Weise sind die Beschichtungen hinsichtlich Verschleiß und Verzunderung dem Grundwerkstoff überlegen.

Je nach Stand der Technik der Verfahren hinsichtlich ihrer Wirtschaftlichkeit und Anwendbarkeit können dies Hartplattierungen aus Stellit als Auftragsschweißung, Dünnschichtverfahren (CrN, CrN-PVD-Beschichtungen, Slurry Coating, Thermal Spray Coating, ...) oder auch modulare Herstellung des Dichtelements einschließlich seiner Beschichtung mittels 3D-Druck sein. Alternativ ist auch eine Beschichtung der Berührungsflächen des L-Rings zweckmäßig, im Hinblick auf die Funktionalität der Dichtungsanordnung.

In einer besonders vorteilhaften Weiterbildung ist die Dichtungskomponente im Querschnitt gesehen als L-Ring mit einem ersten Schenkel und einem zweiten Schenkel ausgebildet, wobei der erste Schenkel in die erste Nut und der zweite Schenkel in die zweite Nut eingreifen.

Eine L-Ring-Dichtung ist eine besonders gute Möglichkeit, ein Ventil an ein Innengehäuse anzubinden. Die Größe des ersten Schenkels und des zweiten Schenkels sind dabei derart ausgewählt, dass eine durch thermische Belastung verursachte Ausdehnung und der damit verbundenen anwendungsspezifischen Kinematik kompensiert werden kann.

In einer vorteilhaften Weiterbildung ist der erste Schenkel länger als der zweite Schenkel ausgebildet.

In einer vorteilhaften Weiterbildung weist der erste Schenkel eine erste innere Anlegefläche auf, die parallel zur ersten Nut ausgebildet ist, wobei der erste Schenkel eine erste Stirnfläche aufweist, die im Wesentlichen senkrecht zur ersten inneren Anlegefläche ausgebildet ist, wobei der Übergang von der ersten inneren Anlegefläche zur ersten Stirnfläche eine erste innere Krümmung aufweist.

Die erste innere Anlagefläche liegt im Einbauzustand berührend in der ersten Nut an. Unter den üblichen Betriebszuständen (innerer Überdruck und thermische Aufweitung des L-Rings größer als die der Nut) kommt der L-Ring an den äußeren Kontaktflächen (Dichtflächen) zur Anlage. Das bedeutet, dass die erste innere Anlegefläche mehr oder weniger in der ersten Nut bewegbar angeordnet ist. Die erste Stirnfläche weist normalerweise keinen Kontakt mit einer anderen Komponente auf. Es ist möglich, dass die im Betrieb auftretenden Temperaturen zu einer Verkrümmung der Schenkel zueinander und somit zu einer Verzwängung zwischen L-Ring und Nut führen. Dadurch würde sich eine weitere Beanspruchung der Oberfläche der Nut ergeben. Um dem vorzubeugen, ist der Übergang zwischen der ersten Stirnfläche und der ersten inneren Anlagefläche mit einer Krümmung versehen, welche die Verkrümmung der Schenkel zueinander im Sinne der Dichtungsaufgabe kinematisch verträglich hält. Die Krümmung ist hierbei als eine Veränderung des Übergangs von der Stirnfläche zur ersten inneren Anlegefläche zu verstehen, die größer ist als die fertigungsbedingte Krümmung.

In einer weiteren vorteilhaften Weiterbildung beschreibt die erste innere Krümmung einen Kreisbogen mit einem Radius R_{1,innen}.

Vorteilhafterweise ist der Radius R_{1,innen}.< L₁, wobei L₁ die Länge der ersten Nut ist

In einer weiteren vorteilhaften Weiterbildung weist der zweite Schenkel eine zweite innere Anlagefläche auf, die parallel zur zweiten Nut ausgebildet ist, wobei der zweite Schenkel eine zweite Stirnfläche aufweist, die im Wesentlichen senkrecht zur zweiten inneren Anlagefläche ausgebildet ist, wobei der Übergang von der zweiten inneren Anlagefläche zur zweiten Stirnfläche eine zweite innere Krümmung aufweist.

Auch hier wird vorteilhafterweise die Geometrie einer L-Ring-Dichtung geändert, um unerwünschten Verformungen vorzubeugen.

Vorteilhafterweise beschreibt die zweite innere Krümmung einen Kreisbogen mit einem Radius R_{2,innen}.

Vorteilhafterweise ist der Radius R_{2,innen} < L₂, wobei L₂ die Länge der zweiten Nut ist.

In einer weiteren vorteilhaften Weiterbildung weist der erste Schenkel eine erste äußere Anlagefläche auf, die parallel zur ersten Nut ausgebildet ist, wobei der Übergang von der ersten äußeren Anlegefläche zur ersten Stirnfläche eine erste äußere Krümmung aufweist. Vorteilhafterweise beschreibt die erste äußere Krümmung einen Kreisbogen mit einem Radius R_{1,außen}, wobei der Radius R_{1,außen} < L₁ ist, wobei L₁ die Länge der ersten Nut ist

In einer weiteren vorteilhaften Weiterbildung weist der zweite Schenkel eine zweite äußere Anlagefläche auf, die parallel zur zweiten Nut ausgebildet ist, wobei der Übergang von der zweiten äußeren Anlegefläche zur zweiten Stirnfläche eine zweite äußere Krümmung aufweist, wobei die zweite äußere Krümmung einen Kreisbogen mit einem Radius R_{2,außen} beschreibt, wobei der Radius R_{2,außen} < L₂ ist, wobei L₂ die Länge der zweiten Nut ist.

Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden.

Gleiche Bauteile oder Bauteile mit gleicher Funktion sind dabei mit gleichen Bezugszeichen gekennzeichnet.

Ausführungsbeispiele werden nachfolgend anhand der Zeichnungen beschrieben. Diese sollen die Ausführungsbeispiele nicht maßgeblich darstellen, vielmehr ist die Zeichnung, wo zur Erläuterung dienlich, in schematisierter und/oder leicht verzerrter Form ausgeführt. Im Hinblick auf Ergänzungen der in der Zeichnung unmittelbar erkennbaren Lehren wird auf den einschlägigen Stand der Technik verwiesen.

Es zeigen:
- Figur 1: Schnitt durch die Einströmung einer zweischaligen Turbine
- Figur 2: einen vergrößerten Ausschnitt aus Figur 1
- Figur 3: eine Darstellung eines Teils einer Dichtungsanordnung
- Figur 4: eine vergrößerte Darstellung einer Dichtungskomponente (L-Ring)
- Figur 5: eine vergrößerte Darstellung einer Dichtungskomponente in einer alternativen Ausführungsform (L-Ring)

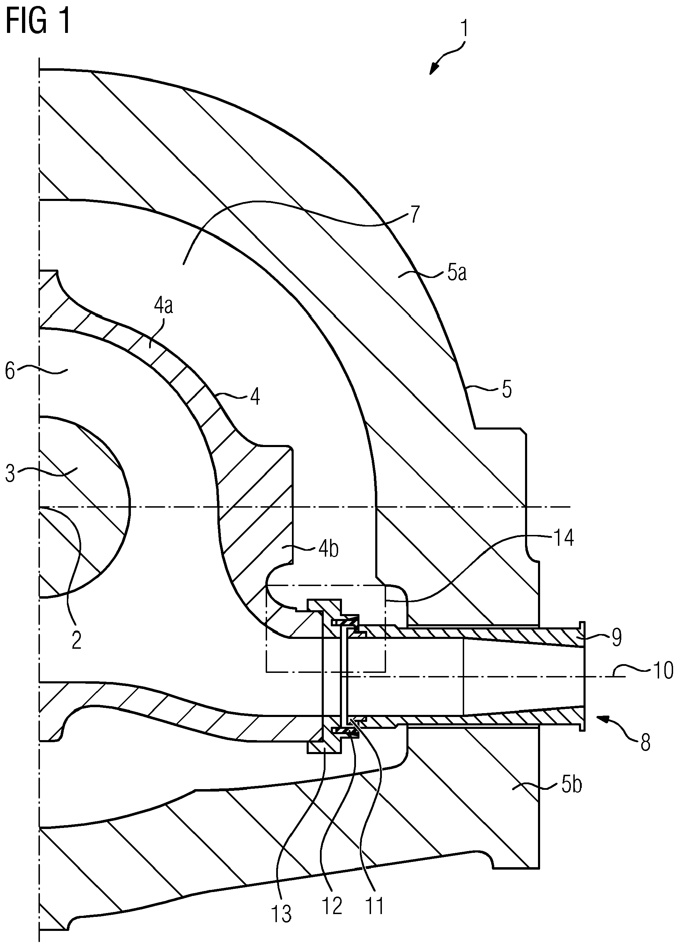

Die Figur 1 zeigt einen Schnitt durch die Einströmung einer zweischaligen Strömungsmaschine z. B. Dampfturbine. Die Dampfturbine 1 umfasst einen um eine Rotationsachse 2 drehbar gelagerten Rotor 3. Um den Rotor 3 ist ein Innengehäuse 4 angeordnet, das ein Innengehäuseoberteil 4a und ein Innengehäuseunterteil 4b umfasst. Um das Innengehäuse 4 herum ist ein Außengehäuse 5 angeordnet, das ebenso ein Außengehäuseoberteil 5a und ein Außengehäuseunterteil 5b umfasst.

Zwischen dem Rotor 3 und dem Innengehäuse 4 ist ein Strömungskanal 6 ausgebildet. Zwischen dem Innengehäuse 4 und dem Außengehäuse 5 ist ein Dampfraum 7 ausgebildet.

Über ein Ventil 8 (vereinfacht dargestellt nur dessen Diffusor) strömt ein Frischdampf in den Strömungskanal 6. Das Ventil 8 umfasst einen Diffusor 9, der um eine Symmetrieachse 10 im Wesentlichen rohrförmig ausgebildet ist. An einem Ventilende 11 ist eine Dichtungskomponente 12 angeordnet, die in eine Nut in einem ersten Bauteil 13, das mechanisch fest mit dem Innengehäuse 4 verbunden oder direkt ins Innengehäuse eingearbeitet ist, mündet. Diese Verbindung ist möglichst dampfdicht ausgebildet.

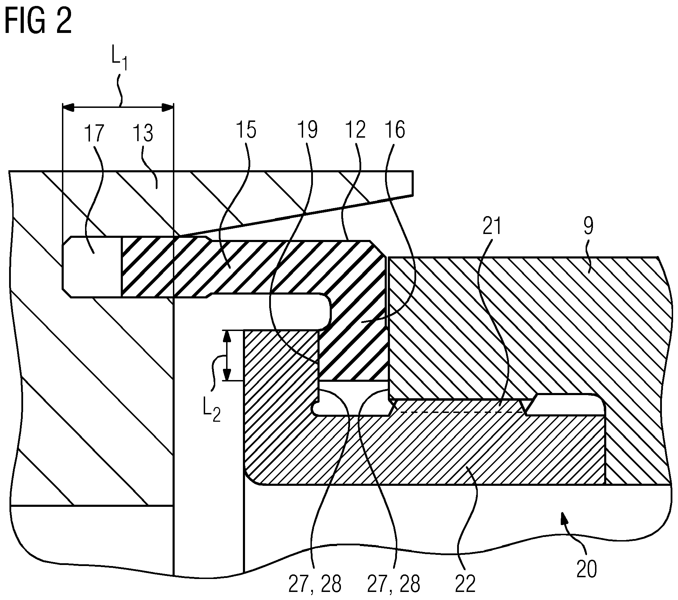

Der durch den Rahmen 14 gekennzeichnete Bereich ist in der Figur 2 näher dargestellt.

Die Figur 2 zeigt demnach die Dichtungskomponente 12, die als L-Ring im Wesentlichen rotationssymmetrisch um die Symmetrieachse 10 ausgebildet ist. Die Dichtungskomponente 12 umfasst einen ersten Schenkel 15 und einen um 90 Grad dazu stehenden zweiten Schenkel 16. Der erste Schenkel 15 und der zweite Schenkel 16 stehen somit im Wesentlichen senkrecht zueinander.

Der erste Schenkel 15 ist hierbei in einer ersten Nut 17 eines ersten Bauteils 3 angeordnet. Das erste Bauteil 13 ist hierbei fest mit dem Innengehäuse 4 verbunden oder direkt ins Innengehäuse 4 eingearbeitet. Die Dichtungskomponente 12 kann somit in der ersten Nut 17 in einer Richtung, die parallel zur Symmetrieachse 10 führt, bewegt werden. Der zweite Schenkel 16 greift in eine zweite Nut 19 in einem zweiten Bauteil 20. Das zweite Bauteil 20 umfasst einen Diffusor 9, wobei an einem inneren Umfang des Diffusors 9 mittels eines Gewindes 21 eine dritte Komponente 22 derart angeordnet ist, dass die zweite Nut 19 zwischen der dritten Komponente 22 und den Diffusor 9 entsteht. Die Dichtungskomponente ist hierbei aus einem hinreichend kriechfesten hochlegierten Stahl, z. B. X13CrMoCoVBNb9-2-1 oder Nimonic80A ausgebildet.

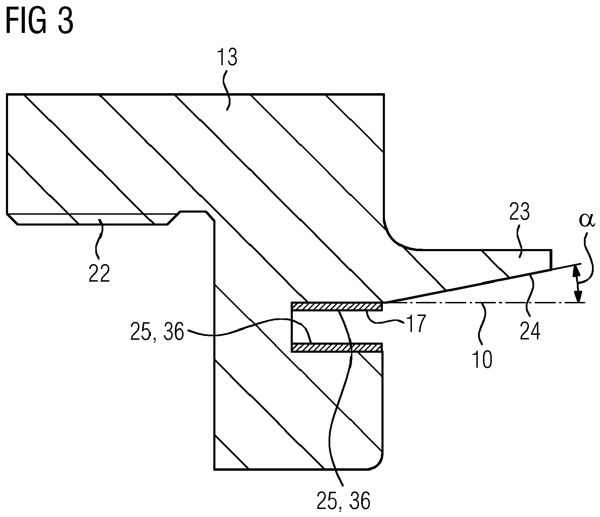

In der Figur 3 ist eine vergrößerte Darstellung des ersten Bauteils 13. Das erste Bauteil 13 umfasst ein weiteres Gewinde 22, das dazu verwendet werden kann, um mit dem Innengehäuse 4 verschraubt zu werden. Des Weiteren umfasst das erste Bauteil einen Vorsprung 23, der eine Oberfläche 24 aufweist, die um einen Winkel α gegenüber der Symmetrieachse 10 schräg angeordnet ist. Dadurch kann der erste Schenkel 15' bei Montage besser in die erste Nut 17 eingeschoben werden. Die erste Nut 17 weist eine erste Berührungsfläche 25 auf, an die die Dichtungskomponente 12 anliegt und auf der ersten Berührungsfläche 25 eine erste Beschichtung 26 angeordnet ist.

Das zweite Bauteil 20 umfasst eine zweite Berührungsfläche 27, an die die Dichtungskomponente 12 anliegt, wobei auf der zweiten Berührungsfläche 27 eine zweite Beschichtung 28 angeordnet ist.

In vorteilhafter Weise sind die Beschichtungen 26 und 28 hinsichtlich Verschleiß und Verzunderung dem Grundwerkstoff überlegen. Alternativ ist auch eine Beschichtung der Berührungsflächen des L-Rings zweckmäßig, im Hinblick auf die Funktionalität der Dichtungsanordnung.

Der erste Schenkel 15 ist länger als der zweite Schenkel 16.

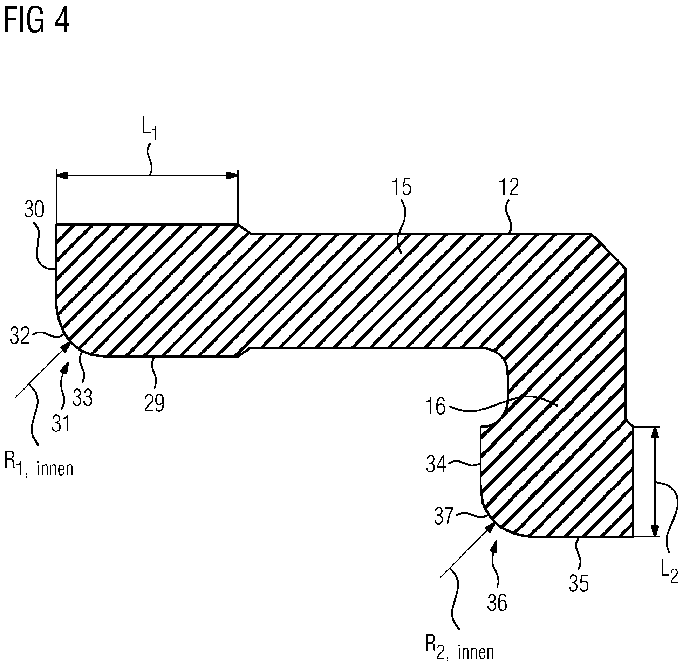

Die Figur 4 zeigt eine vergrößerte Darstellung der Dichtungskomponente 12. Die Dichtungskomponente 12 ist im Querschnitt gesehen ein L-Ring. Der erste Schenkel 15 weist eine erste Anlagefläche 29 auf, die parallel zur ersten Nut 17 ausgebildet ist. Der erste Schenkel 15 weist des Weiteren eine erste Stirnfläche 30 auf, die im Wesentlichen senkrecht zur ersten inneren Anlagefläche 29 ausgebildet ist. Der Übergang 31 von der ersten inneren Anlagefläche 29 zur ersten Stirnfläche 30 ist mit einer ersten inneren Krümmung 32 ausgebildet.

Die erste innere Krümmung 32 kann einen Kreisbogen 33 mit einem Radius R_{1,innen} beschreiben. Der Radius R_{1,innen} ist kleiner L₁, wobei L₁ die Länge der ersten Nut ist.

Der zweite Schenkel 16 weist eine weitere innere Anlegefläche 34 auf, die parallel zur zweiten Nut 19 ausgebildet ist. Der zweite Schenkel 16 weist eine zweite Stirnfläche 35 auf, die im Wesentlichen senkrecht zur zweiten inneren Anlegefläche 34 ausgebildet ist. Der Übergang 36 von der zweiten inneren Anlegefläche 34 zur zweiten Stirnfläche 35 weist eine zweite innere Krümmung 37 auf. Die zweite innere Krümmung 37 kann mit einem Kreisbogen mit einem Radius R_{2,innen} beschrieben werden. Der Radius R_{2,innen} ist kleiner/gleich L₂, wobei L₂ die Länge der zweiten Nut ist.

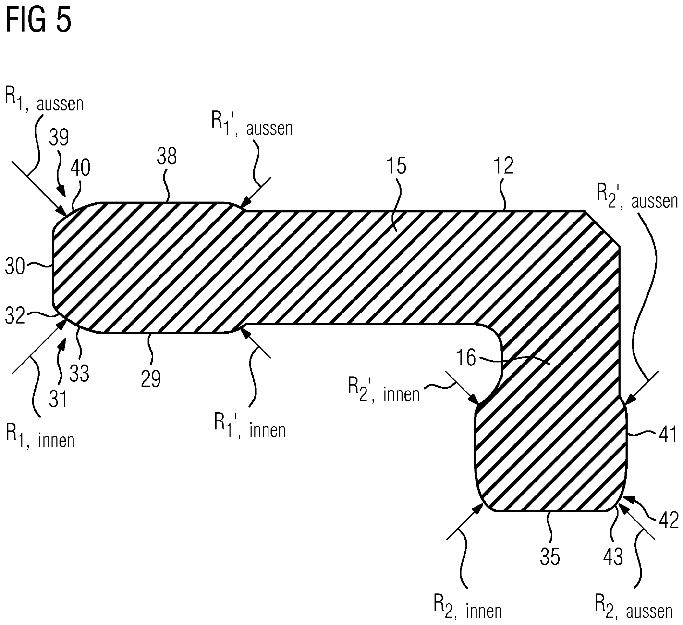

Die Figur 5 zeigt eine alternative Ausführungsform der Dichtungskomponente 12. Der Unterschied zur Dichtungskomponente 12 gemäß Figur 4 ist der, dass nicht nur innen eine Krümmung 39 ausgebildet ist, sondern auch außen eine Krümmung an den Stirnflächen angeordnet wird.

Der erste Schenkel 15 weist eine erste äußere Anlagefläche 38 auf, die zur ersten inneren Anlagefläche 29 gegenüberliegend angeordnet ist. Die erste äußere Anlegefläche 38 ist ebenfalls parallel zur ersten Nut 17 ausgebildet, wobei der Übergang von der Krümmung 39 von der äußeren Anlagefläche 38 zur ersten Stirnfläche 30 eine erste äußere Krümmung 40 aufweist. Die erste äußere Krümmung 40 kann mit einem Kreisbogen mit einem Radius R_{1,außen} beschrieben werden. Der Radius R_{1,außen} ist hierbei größer L₁, wobei L₁ die Länge der zweiten Nut ist.

Der zweite Schenkel 16 weist eine äußere Anlagefläche 41 auf, die parallel zur zweiten Nut 19 ausgebildet ist, wobei der Übergang 42 von der zweiten äußeren Anlagefläche 41 zur zweiten Stirnfläche 35 eine zweite äußere Krümmung 43 aufweist.

Die zweite äußere Krümmung 43 kann mit einem Kreisbogen mit einem Radius R_{2,außen} beschrieben werden.

Der Radius R_{2,außen} ist kleiner L₂, wobei L₂ die Länge der zweiten Nut ist

Obwohl die Erfindung im Detail durch das bevorzugte Ausführungsbeispiel näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Dichtungsanordnung
umfassend ein erstes Bauteil (18) und
ein zweites Bauteil (20),
wobei zwischen dem ersten Bauteil (18) und zweiten Bauteil (20) eine Dichtungskomponente (12) angeordnet ist,
wobei die Dichtungskomponente (12) in eine erste Nut (17) im ersten Bauteil (18) und in eine zweite Nut (19) im zweiten Bauteil (20) angeordnet ist,
**dadurch gekennzeichnet ist,**
**dass** die Dichtungskomponente (12) aus dem Werkstoff X13CrMoCoVBNb9-2-1 oder Nimonic80A ausgebildet ist.

2. Dichtungsanordnung nach Anspruch 1,
wobei die erste Nut (17) eine erste Berührungsfläche (25) aufweist an die die Dichtungskomponente (12) anliegt und auf der ersten Berührungsfläche (25) eine erste Beschichtung (26) angeordnet ist.

3. Dichtungsanordnung nach Anspruch 1 oder 2,
wobei die zweite Nut (19) an zweite Berührungsfläche (27) aufweist an die die Dichtungskomponente (12) anliegt und auf der zweiten Berührungsfläche (27) eine zweite Beschichtung (28) angeordnet ist.

4. Dichtungsanordnung nach einem der vorhergehenden Ansprüche,
wobei die Dichtungskomponente (12) im Querschnitt gesehen als L-Ring mit einem ersten Schenkel (15) und einem zweiten Schenkel (16) ausgebildet ist,
wobei der erste Schenkel (15) in die erste Nut (17) und der zweite Schenkel (16) in die zweite Nut (19) eingreifen.

5. Dichtungsanordnung nach Anspruch 4,
wobei der
erste Schenkel (15) länger ist als der zweite Schenkel (16) .

6. Dichtungsanordnung nach Anspruch 4 oder 5,
wobei der
erste Schenkel (15) eine erste innere Anlegefläche (29) aufweist, die parallel zur ersten Nut (17) ausgebildet ist, wobei der erste Schenkel (15) eine erste Stirnfläche (30) aufweist, die im Wesentlichen senkrecht zur ersten inneren Anlegefläche (29) ausgebildet ist,
wobei der Übergang von der ersten inneren Anlegefläche (29) zur ersten Stirnfläche (30) eine erste innere Krümmung (32) aufweist.

7. Dichtungsanordnung nach Anspruch 6,
wobei die erste innere Krümmung (32) einen Kreisbogen mit einem Radius R_{1,innen} beschreibt.

8. Dichtungsanordnung nach Anspruch 7,
wobei der Radius R_{1,innen} < L₁ ist, wobei L₁ die Länge der ersten Nut (17) ist.

9. Dichtungsanordnung nach Anspruch 4,
wobei der
zweite Schenkel (16) eine zweite innere Anlegefläche (34) aufweist, die parallel zur zweiten Nut (19) ausgebildet ist,
wobei der zweite Schenkel (16) eine zweite Stirnfläche (35) aufweist, die im Wesentlichen senkrecht zur zweiten inneren Anlegefläche (34) ausgebildet ist,
wobei der Übergang von der zweiten inneren Anlegefläche (34) zur zweiten Stirnfläche (35) eine zweite innere Krümmung (37) aufweist.

10. Dichtungsanordnung nach Anspruch 9,
wobei die zweite innere Krümmung (37) einen Kreisbogen mit einem Radius R_{2,innen} beschreibt.

11. Dichtungsanordnung nach Anspruch 10,
wobei der Radius R_{2,innen} < L₂ ist, wobei L₂ die Länge der zweiten Nut (19) ist.

12. Dichtungsanordnung nach Anspruch 4,
wobei der erste Schenkel (15) eine erste äußere Anlegefläche (38) aufweist, die parallel zur ersten Nut (17) ausgebildet ist,
wobei der Übergang von der ersten äußeren Anlegefläche (38) zur ersten Stirnfläche (30) eine erste äußere Krümmung (40) aufweist.

13. Dichtungsanordnung nach Anspruch 12,
wobei die erste äußere Krümmung (40) einen Kreisbogen mit einem Radius R_{1,aussen} beschreibt.

14. Dichtungsanordnung nach Anspruch 13,
wobei der Radius R_{1,aussen} < L₁ ist, wobei L₁ die Länge der zweiten Nut (19) ist.

15. Dichtungsanordnung nach Anspruch 4,
wobei der zweite Schenkel (16) eine zweite äußere Anlegefläche (41) aufweist, die parallel zur zweiten Nut (19) ausgebildet ist,
wobei der Übergang von der zweiten äußeren Anlegefläche (41) zur zweiten Stirnfläche (35) eine zweite äußere Krümmung (43) aufweist.

16. Dichtungsanordnung nach Anspruch 15,
wobei die zweite äußere Krümmung (43) einen Kreisbogen mit einem Radius R_{2,aussen} beschreibt.

17. Dichtungsanordnung nach Anspruch 16,
wobei der Radius R_{2,aussen} < L₂ ist, wobei L₂ die Länge der zweiten Nut (19) ist.
